# EUROPÄISCHE PATENTSCHRIFT

(11) **EP 0 536 434 B1**
(45) Veröffentlichungstag und Bekanntmachung des Hinweises auf die Patenterteilung: **28.09.1994**
(21) Anmeldenummer: 91117101.5
(22) Anmeldetag: 08.10.1991
(51) Int. Cl.: F16L 37/22, F16L 37/28

(54) **Selbstentlüftende Schnellverschlusskupplung für Druckgas-, insbesondere Druckluftleitungen**
Self-vented quick coupling for pressurized gas pipes, especially for compressed air pipes
Raccord rapide auto-ventilé pour tuyaux de gaz sous pression, en particulier pour tuyaux d'air comprimé

(43) Veröffentlichungstag der Anmeldung: 14.04.1993
(73) Patentinhaber: RECTUS-APPARATEBAU Walter Klein GmbH, 71735 Eberdingen (DE)
(72) Erfinder: Heilmann, Roland, W-7135 Wiernsheim (DE)
(74) Vertreter: Rüger, Rudolf, Dr.-Ing.

(56) Entgegenhaltungen:
- EP-A- 0 100 090
- DE-A- 2 741 512
- DE-B- 1 068 962

## Beschreibung

Die Erfindung betrifft eine selbstentlüftende Schnellverschlußkupplung für Druckgas-, insbesondere Druckluftleitungen, mit einer an eine erste Leitung anschließbaren und einen Kupplungsstecker einer zweiten Leitung abgedichtet aufnehmenden Kupplungsbuchse, mit einem in der Kupplungsbuchse angeordneten, von dem eingesteckten Kupplungsstecker geöffnet zu haltenden Abschlußventil, mit zwei an der Kupplungsbuchse angeordneten Verriegelungseinrichtungen, von denen jede wenigstens ein Verriegelungselement für den eingesteckten Kupplungsstecker aufweist, sowie mit einer auf der Kupplungsbuchse gegen Federkraft axial verschieblich gelagerten und mit den beiden Verriegelungseinrichtungen zusammenwirkenden, von Hand betätigbaren Schiebehülse, die, ausgehend von einer Ausgangsstellung,in der bei geöffnetem Absperrventil der Kupplungsstecker durch eine erste Verriegelungseinrichtung in seiner Kupplungsstellung gehalten ist,entgegen der Federkraft in eine erste Stellung verschiebbar ist, in der der Kupplungsstecker bei geschlossenem Absperrventil von der zweiten Verriegelungseinrichtung in einer Zwischenstellung gehalten ist, in der eine Entlüftungseinrichtung für die zweite Leitung wirksam ist, wobei die Schiebehülse sodann aus dieser ersten Stellung in der gleichen Richtung weiter in eine zweite Stellung verschiebbar ist, in der der Kupplungsstecker ganz freigegeben ist.

Eine Schnellverschlußkupplung mit diesen Merkmalen ist in verschiedenen Ausführungsformen, bspw. aus den DE-A- 1943 552, 2226 793 und 2705 319 bekannt. Die wesentliche Eigenschaft dieser sogenannten Entlüftungskupplung mit Selbstentlüftung besteht darin, daß Maßnahmen getroffen sind, um beim Entkuppeln dem Gefahrenmoment für den Benutzer entgegenzuwirken, das dadurch gegeben ist, daß beim Lösen der Kupplung das unter Druck stehende Gas in der abgekuppelten Leitung frei wird und durch den Kupplungsstecker entweicht. Bereits bei verhältnismäßig kleinen Querschnitten und Längenabmessungen der abgekuppelten Leitung wird eine plöczliche peitschenartige Bewegung dieser Leitung hervorgerufen, die zu einer Gefährdung des Benutzers durch die umherschnellende Leitung führt. Die Verletzungsgefahr für den Benutzer ist umso größer, wenn ein unbeabsichtigtes Entkuppeln der Leitung nicht sicher ausgeschlossen ist.

Die bekannte Schnellverschlußkupplung ist deshalb derart aufgebaut, daß beim Entkuppeln der Benutzer die Schiebehülse zunächst in eine erste Stellung vorbewegen soll, in der lediglich die erste Verriegelungseinrichtung gelöst ist, die den Kupplungsstecker in seiner abgedichteten Kupplungsstellung gehalten hat. Der Kupplungsstecker kann lediglich um einen verhältnismäßig kurzen Weg, der größer ist als der Ventilhub des Absperrventiles, in eine Zwischenstellung in der Kupplungsmuffe gelangen, in der er von der zweiten Verriegelungseinrichtung sicher verriegelt ist. In dieser Zwischenstellung ist bei geschlossenem Abschlußventil der Kupplungsstecker über eine Entlüftungseinrichtung in Form von Kanälen oder Ringspalten der Kupplungsmuffe mit der Umgebung verbunden, so daß die Entlüftung der an ihn angeschlossenen Leitung erfolgen kann, solange der Kupplungsstecker noch fest in der Kupplungsmuffe gehalten ist. Erst nachdem die Entlüftung erfolgt ist, soll der Benutzer die Schiebehülse in der gleichen Richtung wie vorher bei der Bewegung aus der Ausgangsstellung in die Zwischenstellung nunmehr von der Zwischenstellung in eine Endstellung verschieben, in der auch die zweite Verriegelungseinrichtung gelöst und damit der Kupplungsstecker ganz freigegeben ist. Dabei ist bspw. durch unterschiedliche Bemessung der Federkennlinien von die Schiebehülse auf deren Ausgangsstellung zu vorspannenden Federmitteln eine Hemmschwelle für die Schiebehülse vorgesehen, die von dem Benutzer eine erhöhte Verschiebekraft erfordert, wenn er die Schiebehülse aus der Zwischenstellung in die Endstellung überführen will. Da der Benutzer diese Hemmschwelle willkürlich überwinden und damit die Schiebehülse auch in einem Zug von ihrer Ausgangsstellung in die Endstellung oder vor abgeschlossener Entlüftung aus der Zwischenstellung in die Endstellung überführen kann, kann bei dieser Schnellverschlußkupplung nicht ausgeschlossen werden, daß der Kupplungsstecker bereits zu einem Zeitpunkt freigegeben wird, zu dem die an ihn angeschlossene Leitung noch nicht soweit entlüftet ist, daß keine Gefährdung der Umgebung durch den freikommenden Kupplungsstecker und die umherschnellende Leitung mehr vorhanden ist. Den Abschluß des Entlüftungsvorganges kann der Benutzer im übrigen im wesentlichen nur akustisch dadurch wahrnehmen, daß das von dem unter Druck ausströmenden Gas erzeugte Geräusch verstummt.

Grundsätzlich Gleiches gilt auch für eine aus der EP-A- 0013 393 bekannte Rohrleitungskupplung, bei der die Anordnung derart getroffen ist, daß zum Entkuppeln die Schiebehülse aus ihrer Ausgangsstellung zunächst in eine erste Stellung zurückgeschoben wird, in der der Kupplungsstecker in eine Zwischenstellung für die Entlüftung übergehen kann, aus welcher der Kupplungsstecker anschließend dadurch gelöst wird, daß die durch federnde Rastmittel in ihrer Zwischenstellung gehaltene Schiebehülse in einer entgegengesetzten Bewegung wieder in ihre Ausgangsstellung zurückbefördert wird. Auch hier kann der Benutzer durch willkürliches schnelles Hin- und Herschieben der Schiebehülse den Kupplungsstecker unabhängig von dem Entlüftungsvorgang sofort aus der Kupplungsmuffe lösen. Insbesondere bei Arbeiten über Kopf kann durch versehentliches Vor- und Zurückschieben der Schiebehülse der Kupplungsstecker so unbeabsichtigt aus der Kupplungsmuffe herausgeschleudert werden.

Weiter ist aus der EP-A-100 090 eine selbstentlüftende Schnellverschlußkupplung bekannt, wobei an der Kupplungsbuchse eine Ventilhülse gelagert ist, die in eine Zwischenstellung verschiebbar ist, und wobei ein Druckausgleich mit der Atmosphäre stattfinden kann. Eine auf die Ventilhülse wirkende Druckfeder verschiebt die Ventilhülse in eine äußere Endstellung, in der die Kugeln eines Gesperres der Ventilhülse sich in eine Ringnut verlagern und der druckentlastete Kupplungsstecker aus der Kupplungsbuchse herausgezogen werden kann.

Aufgabe der Erfindung ist es demgegenüber, eine selbstentlüftende Schnellverschlußkupplung mit den eingangs genannten Merkmalen zu schaffen, die sich bei einfacher Handhabung dadurch auszeichnet, daß sie eine erhöhte Sicherheit gegen unbeabsichtigtes Freikommen des Kupplungssteckers bei noch nicht entlüfteter abgekuppelter Leitung bietet, und zwar ohne daß dafür Nachteile hinsichtlich der Möglichkeit einfacher Herstellung, einer Verengung des Gasdurchlaßquerschnitts oder des Platzbedarfes in Kauf genommen werden müßten.

Zur Lösung dieser Aufgabe ist die selbstentlüftende Schnellverschlußkupplung erfindungsgemäß dadurch gekennzeichnet, daß an der Kupplungsbuchse ein einen axialen Anschlag für die in der ersten Stellung stehende Schiebehülse bildendes bewegliches Sperrglied gelagert ist, das bei geöffnetem Absperrventil mit dem Druck in der ersten Leitung beaufschlagt und in einer die Schiebehülse arretierenden Anschlagstellung gehalten ist und das bei geschlossenem Absperrventil unter Freigabe der Schiebehülse über die Entlüftungseinrichtung druckentlastet ist.

Das durch das Absperrventil gesteuerte Sperrglied gewährleistet, daß beim Entkuppeln die als Entriegelungshülse wirkende Schiebehülse nur in ihre erste Stellung zurückgeschoben werden kann, in der sie an dem Sperrglied anschlägt und dadurch arretiert ist. Erst nach dem Entlüften des abzukuppenden Leitungsteiles, was je nach Druck- und Leitungsvolumen bspw. 2 bis 4 Sekunden in Anspruch nehmen kann, kann die Schiebehülse in ihre Endstellung zurückgeschoben werden, in der der Kupplungsstecker völlig freigegeben ist. Eine Fehlbedienung der Schnellverschlußkupplung beim Entkuppeln ist damit ebenso ausgeschlossen wie der Versuch, die Schnellverschlußkupplung vor Abschluß der Entlüftung zu überlisten. Gleichzeitig bleibt aber bei dieser Schnellverschlußkupplung der Vorteil der Einhandbedienung, d.h. der einfachen Handhabung, erhalten. Der Benutzer braucht beim Einkuppeln die Schiebehülse nicht zu halten oder zu betätigen.

In einer bevorzugten Ausführungsform ist das Sperrglied ein an einem Teil der Kupplungsbuchse axial verschieblich gelagerter Ringkolben, durch den eine Zylinderkammer begrenzt ist, die einen von dem Absperrventil gesteuerten Druckbeaufschlagungsanschluß aufweist. Dieser Druckbeaufschlagungsanschluß kann seinerseits wenigstens einen nach innen führenden Kanal aufweisen, der innerhalb der Kupplungsmuffe auf der stromabwärts von dem Ventilsitz des Absperrventils liegenden Seite mündet.

Da das Sperrglied, abhängig von seiner Druckbeaufschlagung, entweder in der Anschlagstellung steht, in der es die Schiebehülse in deren Zwischenstellung arretiert, oder eine Ruhestellung einnimmt, in der es die Schiebehülse freigibt, so daß diese in ihre Endstellung überführt werden kann, kann das Sperrglied gleichzeitig zur optischen Anzeige des augenblicklichen Zustandes der Kupplung und des Fortschrittes der Entlüftung benutzt werden. Zu diesem Zwecke kann das Sperrglied einen von außen sichtbaren, durch seine Stellung als Anzeigemittel für die Druckbeaufschlagung des Sperrgliedes wirkenden Teil aufweisen. Damit braucht sich der Benutzer der neuen Schnellverschlußkupplung beim Entkuppeln nicht mehr auf die akustische Wahrnehmung des Geräusches des ausströmenden Gases zu verlassen, sondern er kann unmittelbar an der Schnellverschlußkupplung selbst optisch ablesen, ob die Entlüftung schon soweit fortgeschritten ist, daß er die Schiebehülse gefahrlos in ihre Endstellung zurückschieben kann.

Die den Kupplungsstecker in seiner Kupplungsstellung haltende erste Verriegelungseinrichtung ist mit Vorteil eine Kugelverriegelung mit wenigstens einer in einem Käfig der Kupplungsbuchse radial beweglich geführten Kugel, die bei in der Ruhestellung stehender Schiebehülse durch eine Fläche an der Schiebehülse in einer Eingriffsstellung mit einer Nut des Kupplungssteckers gehalten und bei in der Zwischenstellung stehender Schiebehülse von dieser freigegeben ist. Diese Kugelverriegelung erlaubt es, eine größere Anzahl (bspw. 6) Kugeln zur Halterung des Kupplungssteckers in der Kupplungsstellung zu benutzen, in der der Kupplungsstecker mit Vorspannung gegen die zugeordnete Dichtung in der Kupplungsmuffe und gegen die Schließfeder des Absperrventils gedrückt ist. Diese axial wirkende Vorspannungskraft teilt sich damit auf eine entsprechende Viezahl von Abstützstellen an der Wandung der Umfangsnut des Kupplungssteckers auf, mit der Folge, daß die Flächenpressung an den einzelnen Abstützstellen entsprechend nieder ist, so daß auch Kupplungsstecker aus weichem Material ohne die Gefahr einer vorzeitigen Abnutzung verwendet werden können (z.B. aus Messing).

Als zweckmäßig hat es sich auch erwiesen, wenn die Schiebehülse in ihrer ersten Stellung durch eine der beiden Verriegelungseinrichtungen entgegen der Federkraft verriegelt ist, wobei ihre Verriegelung durch den Kupplungsstecker beim Einschieben in die Kupplungsmuffe lösbar ist. Auf diese Weise kann nämlich erreicht werden, daß beim Einstecken des Kupplungssteckers, d.h. beim Einkuppeln, eine sinnfällige optische Anzeige der ordnungsgemäßen Verriegelung des Kupplungssteckers in diessen Kupplungsstellung gegeben ist. Dazu kann bei der Ausführungsform mit der vorerwähnten Kugelverriegelung die Schiebehülse in ihrer Zwischenstellung durch die wenigstens eine Kugel verriegelt sein. Erst wenn somit die erste Verriegelungseinrichtung ordnungsgemäß eingerastet ist, wird die Schiebehülse freigegeben, so daß sich diese über die Kugeln bewegt und dabei in ihre Ausgangsstellung gelangt. Sollte die Schiebehülse aus irgendwelchen Gründen ihre Ausgangsstellung nicht erreichen, zeigt dies an, daß der Kupplungsstecker nicht ordnungsgemäß eingekuppelt ist. Dies steht im Gegensatz zu bekannten Ausführungen von Schnellverschlußkupplungen, bei denen die Schiebehülse beim Kuppeln unbewegt bleibt, mit der Folge, daß das Einkuppeln des Kupplungssteckers nur akustisch durch das von den einrastenden Sperrelementen der ersten Verriegelungseinrichtung erzeugte Geräusch wahrgenommen werden kann.

Die den Kupplungsstecker in der Zwischenstellung haltende zweite Verriegelungseinrichtung kann an sich beliebig zweckentsprechend, bspw. ebenfalls als Kugelverriegelung, aufgebaut sein. Als besonders vorteilhaft hat es sich aber erwiesen, wenn diese Verriegelungseinrichtung wenigstens ein in einer Schrägführung der Kupplungsmuffe beweglich geführtes Verriegelungselement aufweist, das durch Federmittel gegen die Schiebehülse abgestützt ist. Das Verriegelungselement kann dabei ein Verriegelungsstift sein, doch sind auch Ausführungen mit einer Kugel denkbar. Eine solche Verriegelungseinrichtung ist grundsätzlich aus der DE-A- 19 02 986 bekannt. Dabei erfolgt allerdings die Abstützung der Verriegelungselemente durch die Federmittel gegen die Kupplungsbuchse und nicht gegen die Schiebehülse.

Das erwähnte wenigstens eine Verriegelungselement der zweiten Verriegelungseinrichtung kann gegen die Federmittel über ein in der Schiebehülse beweglich gelagertes Druckstück abgestützt sein, wobei das Druckstück bei in der Zwischenstellung stehendem Kupplungsstecker über in der Schiebehülse ausgebildete Kanäle der Entlüftungseinrichtung zeitweilig mit Druck in einem die Federmittel unterstützenden Sinne beaufschlagt ist. Auf diese Weise läßt sich erreichen, daß zum einen ein zusätzlicher Austrittsquerschnitt für die beim Entlüftungsvorgang abströmende Gasmenge zur Verfügung steht, womit der Entlüftungsvorgang selbst verkürzt wird, und daß zum anderen während der kritischen Phase der Bewegung des Kupplungssteckers aus seiner Kupplungsstellung in die Zwischenstellung das wenigstens eine Verriegelungselement der zweiten Verriegelungseinrichtung zusätzlich auf seine Verriegelungsstellung hin vorgespannt ist und deshalb mit erhöhter Sicherheit in die Umfangsnut des Kupplungssteckers einfällt.

Schließlich kann die Schiebehülse den eingangs erwähnten Ringkolben zumindest teilweise übergreifend ausgebildet sein, wobei zwischen dem Ringkolben und der Schiebehülse nach außen führende Entlüftungskanäle der Entlüftungseinrichtung angeordnet sind. Die Mündung der Entlüftungskanäle ist damit geschützt und lagegünstig.

In der Zeichnung ist ein Ausführungsbeispiel des Gegenstandes der Erfindung dargestellt. Es zeigen:
- Fig.1,2: zwei die Kupplungsbuchse und den Kupplungsstecker einer entkuppelten, selbstentlüftenden Schnellverschlußkupplung gemäß der Erfindung, teilweise im axialen Schnitt, in einer Seitenansicht,
- Fig. 3: die Kupplungsmuffe nach Fig. 1, in einer stirnseitigen Draufsicht,
- Fig. 4: ein Detail des Ringkolbens und der Schiebehülse der Kupplungsmuffe nach Fig. 1, in einer Draufsicht,
- Fig. 5: die Schnellverschlußkupplung nach Fig. 1,2 im gekuppelten Zustand, teilweise im axialen Schnitt, in einer Seitenansicht,
- Fig. 6: die Schnellverschlußkupplung nach Fig. 5, mit in der Zwischenstellung stehendem Kupplungsstecker, unter Veranschaulichung des Zustandes vor Abschluß der Entlüftung, in einer entsprechenden Darstellung,
- Fig. 7: die Schnellverschlußkupplung nach Fig. 6, unter Veranschaulichung des Zustandes bei Abschluß der Entlüftung, in einer entsprechenden Darstellung, und
- Fig. 8: die Schnellverschlußkupplung nach Fig.5, unter Veranschaulichung des Zustandes beim Lösen der zweiten Verriegelungseinrichtung, in einer entsprechenden Darstellung.

Die in der Zeichnung dargestellte selbstentlüftende Sicherheits-Schnellverschlußkupplung besteht aus einer Kupplungsbuchse 1 und einem dieser zugeordneten Kupplungsstecker 2, der abgedichtet in die Kupplungsbuchse 1 einsteckbar ist.

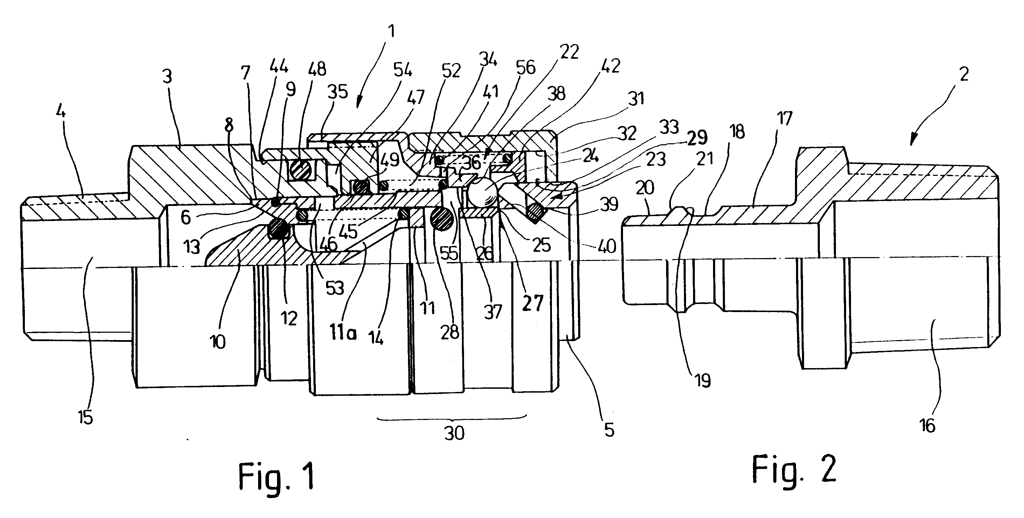

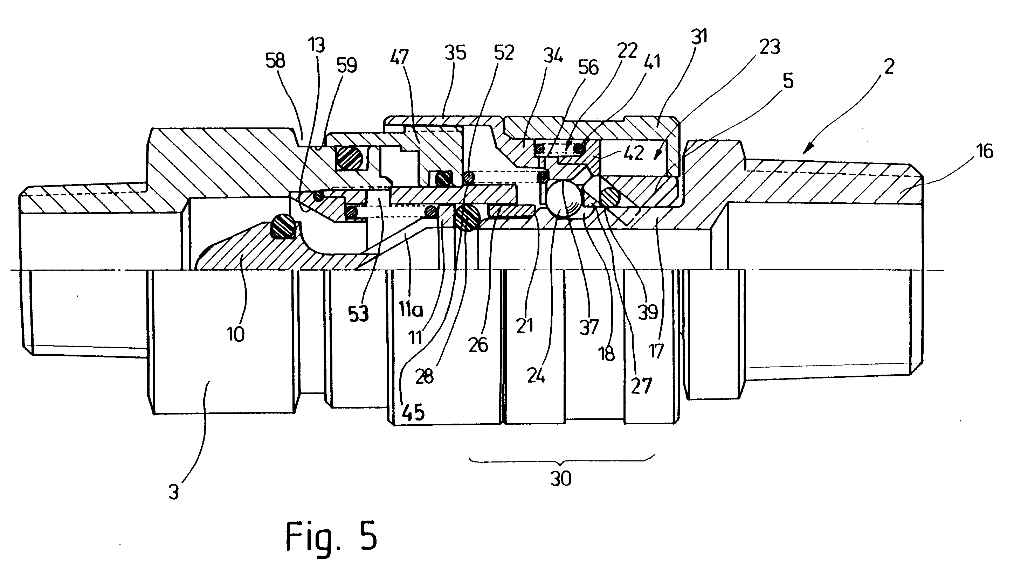

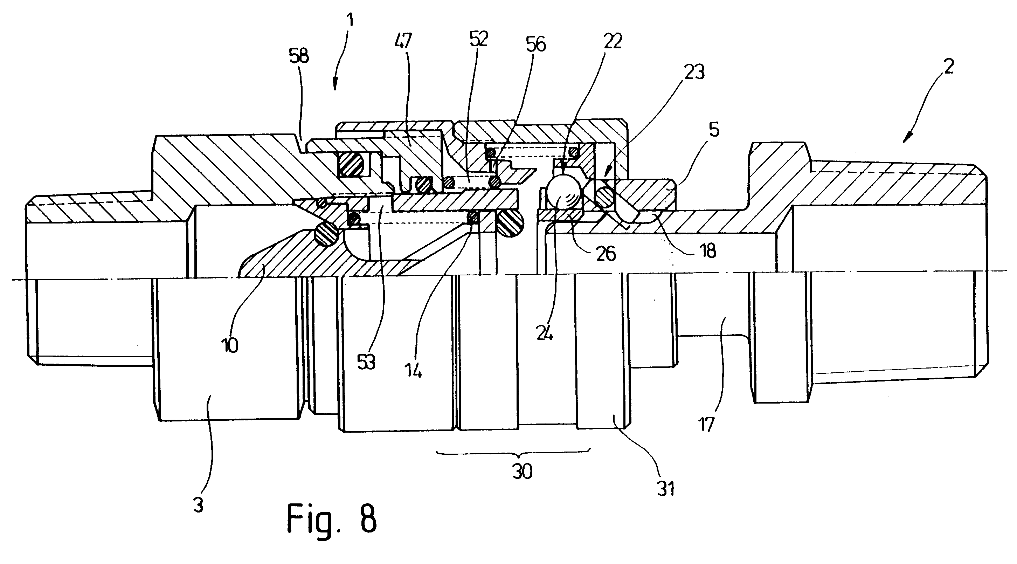

Die Kupplungsbuchse 1 weist ein im wesentlichen hohlzylindrisches Buchsenteil 3 auf, an das einenends ein Gewindestück 4 angeformt ist, das zum Anschluß einer nicht weiter dargestellten ersten Druckgasleitung, bspw. eines Druckluftschlauches, dient. Andernends ist in das Buchsenteil 3 ein ebenfalls im wesentlichen hohlzylindrischer Ventilkörper 5 eingeschraubt, durch den ein Ventilsitzring 6 fixiert ist, der in eine Ausdrehung 7 des Buchsenteiles 3 eingesetzt und axial gegen eine Ringschulter 8 abgestützt ist. Ein zwischengelegter O-Ring 9 dient zur gasdichten Abdichtung. In dem Ventilkörper 5 ist ein Ventilverschlußstück 10 mittels eines Ringflansches 11 verschieblich geführt, das einen O-Ring 12 trägt, der mit einem an dem Ventilsitzring 6 ausgebildeten kegelförmigen Ventilsitz 13 zusammenwirkt und gemeinsam mit diesem ein Absperrventil bildet. Das Verschlußstück 10 ist von einer zwischen dem Ringflansch 11 und den Ventilsitzring 6 angeordneten Druckfeder 14 in Richtung auf die in den Fig. 1 und 8 dargestellte Schließstellung hin vorgespannt, in der der koaxiale Gasdurchgangskanal 15 der Kupplungsbuchse 1 gegen einen Gasaustritt abgesperrt ist. Der Ringflansch 11 ist mit dem Verschlußstück 10 lediglich über ringsum verteilte Stege 11a verbunden, zwischen denen bei geöffnetem Absperrventil (Fig.5) ein freier Durchtrittsquerschnitt für die Gasströmung vorhanden ist.

Der mit einem Gewindeteil 16 zum Anschluß an eine ebenfalls nicht weiter dargestellte zweite Leitung, bspw. einen Druckluftschlauch, versehene Kupplungsstecker 2 weist ein im wesentlichen hohlzylindrisches Steckerteil 17 auf, das mit radialem Spiel in den Ventilkörper 5 einsteckbar ist und in dessen Bereich außen eine ringsumlaufende Umfangsnut 18 angeordnet ist, die zumindest auf der der freien Stirnfläche des Steckerteiles 17 benachbarten Seite bei 19 mit einer Kegel- oder Konusfläche ausgebildet ist. Endseitig weist der Steckerteil 17 schließlich einen zylindrischen Bereich 20 verringerten Durchmessers auf, der nach innen zu durch eine Ringschulter 21 begrenzt ist.

An der Kupplungsbuchse 1 sind zwei in Achsrichtung gegeneinander versetzt angeordnete Verriegelungseinrichtungen 22, 23 für den Kupplungsstecker 2 vorgesehen. Die erste Verriegelungseinrichtung 22 ist als Kugelverriegelung ausgebildet. Sie weist als Verriegelungselemente eine Anzahl (im vorliegenden Falle 6) Kugeln 24 auf, die in entsprechenden durchgehenden Bohrungen 25 des Ventilkörpers 5 wie in einem Kugelkäfig radial beweglich gelagert sind. Eine in dem Ventilkörper 5 leicht verschieblich geführte Distanzhülse 26 ist zwischen einer in den Fig. 1, 8 dargestellten, durch eine Ringschulter 27 des Ventilkörpers 5 bestimmten Stellung,in der sie die die Kugeln 24 enthaltenden Bohrungen 25 des Kugelkäfigs nach innen versperrt und einer bspw. aus Fig. 5 zu entnehmenden abseitigen Stellung verschiebbar, in der sie die Bohrungen 25 freigegeben hat, so daß die Kugeln 24 in die Umfangsnut 18 des eingeschobenen Steckerteils 17 einrasten können. Zwischen der Distanzhülse 26 und dem Ringflansch 11 des Ventilverschlußstückes 10 ist ein O-Ring 28 ohne radiale Vorspannung eingefügt, der bei vollständig eingestecktem Kupplungsstecker 2 in der aus Fig. 5 ersichtlichen Weise zur Abdichtung des Steckerteils 17 gegen den Ventilkörper 5 dient und über den bei eingestecktem Kupplungsstecker 2 das Ventilverschlußstück 10 in der geöffneten Stellung gehalten ist.

Auf einer zylindrischen Umfangsfläche 29 des Ventilkörpers 5 ist eine als Entriegelungshülse für die beiden Entriegelungseinrichtungen 22, 23 dienende Schiebehülse 30 axial verschieblich geführt. Die Schiebehülse 30 ist zweiteilig ausgebildet. Sie besteht aus einem ersten kappenartigen Hülsenteil 31, das mit einer zylindrischen Bohrung 32 versehen ist und eine Führungsfläche 33 trägt, sowie aus einem in das ersten Hülsenteil 31 eingeschraubten koaxialen zweiten Hülsenteil 34, das endseitig mit einem zylindrischen schürzenartigen Teil 35 versehen ist. An dem zweiten Hülsenteil 34 ist ein innerhalb des ersten Hülsenteiles 31 liegender Ring 36 angeformt, der eine zylindrische glatte Innenfläche 37 und eine im wesentlichen kegelförmige Stirnfläche 38 trägt.

Wie bspw. aus Fig. 5 zu entnehmen, ist der Ring 36 derart bemessen und angeordnet, daß bei in die Umfangsnut 18 des eingesteckten Kupplungssteckers 2 eingerasteten Kugeln 24 der Ring 36 mit seiner Innenfläche 37 die Kugeln 24 übergreift und in ihrer Verriegelungsstellung hält, so daß der Kupplungsstecker 2 in der Kupplungsbuchse 1 in der Kupplungsstellung sicher verriegelt ist.

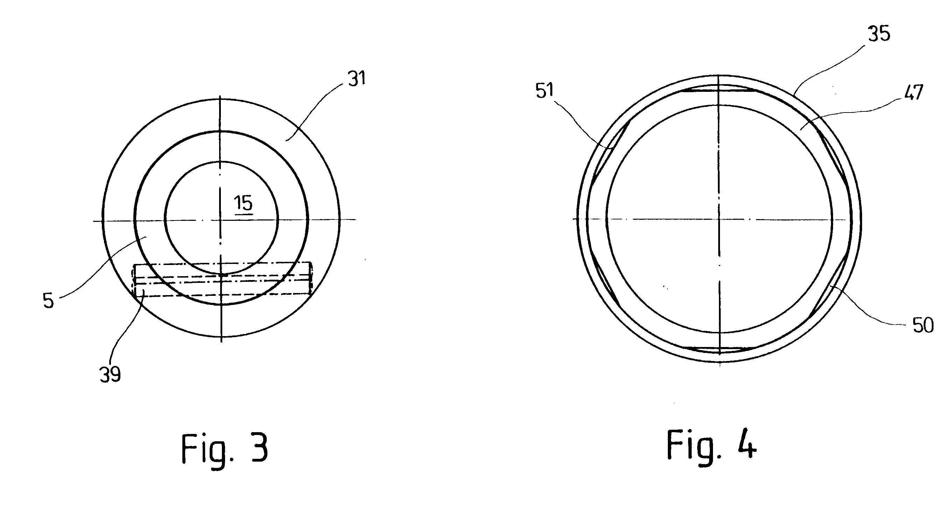

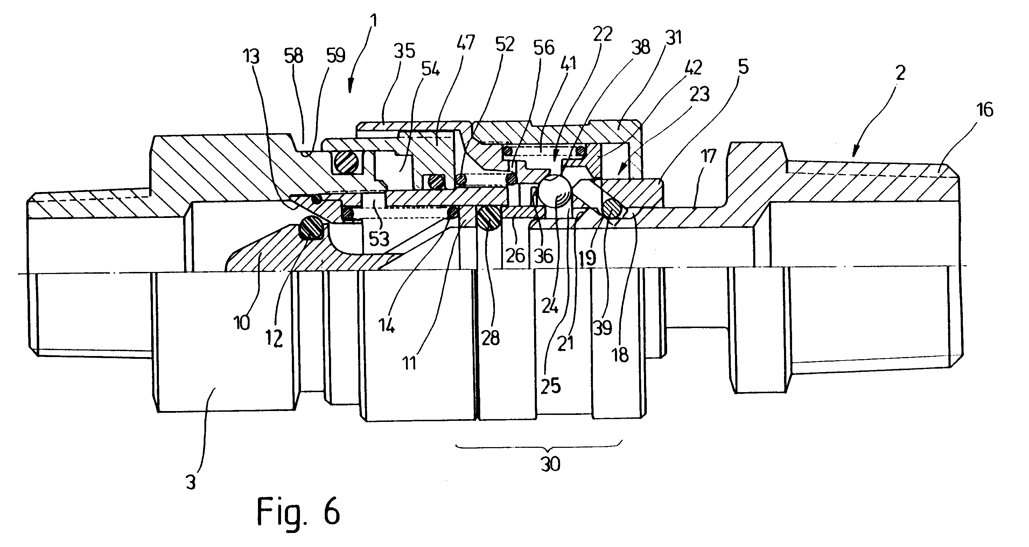

Die zweite Verriegelungseinrichtung 23 weist zwei zylindrische Halte- oder Verriegelungsstifte 39 auf, die in zwei einander gegenüberliegenden Schrägführungen 40 des Ventilkörpers 5 parallel zueinander zwischen einer in Fig. 5 dargestellten unwirksamen Stellung und einer aus Fig. 6 ersichtlichen Verriegelungsstellung beweglich sind, in der sie in die Umfangsnut 18 des Steckerteils 17 eingerastet sind. Diese beiden Stellungen der Verriegelungsstifte 39 sind in Fig. 3 veranschaulicht.

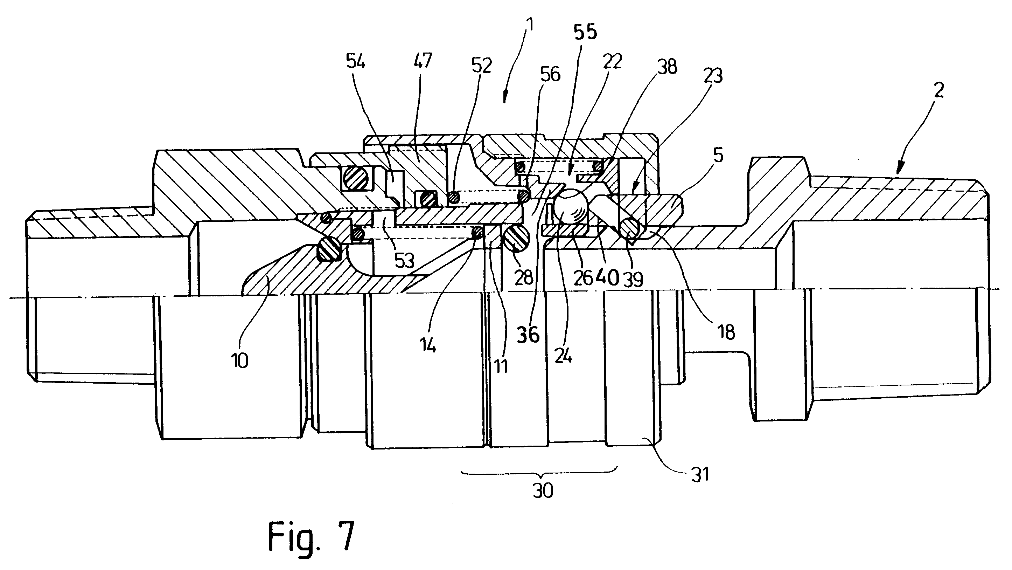

Die Verriegelungsstifte 39 sind in Richtung auf ihre Verriegelungsstellung (Fig. 6,7) hin durch eine Druckfeder 41 vorgespannt, die in der Schiebehülse 30 angeordnet und einenends gegen das zweite Hülsenteil 34 abgestützt ist. Auf ihrer anderen Seite liegt die Druckfeder 41 an einer Druckplatte 42 an, die an der Wandung der zylindrischen Bohrung 32 der Schiebehülse 30 und der Führungsfläche 29 des Ventilkörpers 5 geführt ist und auf der die Verriegelungsstifte 39 endseitig aufliegen.

Auf einer zylindrischen Fläche 44 des Buchsenteiles 3 und einem unter Ausbildung einer Ringschulter 45 zurückgesetzten zylindrischen Flächenbereich 46 des Ventilkörpers 5 ist ein ein Sperrglied bildender Ringkolben 47 längsverschieblich geführt, der gegen das Buchsenteil 3 und den Ventilkörper 5 jeweils über einen O-Ring 48 bzw. 49 abgedichtet ist. Der Ringkolben 47 ist, wie aus Fig. 4 zu entnehmen, an seiner zylindrischen Außenfläche mit Abflachungen 50 nach Art eines Sechskantes versehen, die gemeinsam mit der innenliegenden Zylinderfläche des übergreifenden schürzenartigen Teiles 35 des zweiten Hülsenteiles 34 axiale Entlüftungskanäle 51 begrenzen, die Teile einer Entlüftungseinrichtung sind. Eine zwischen dem Ringkolben 47 und dem ersten Hülsenteil 34 angeordnete Druckfeder 52 ist bestrebt, die Schiebehülse 30 in der in Fig. 5 dargestellten Ausgangsstellung zu halten.

Die insoweit beschriebene selbstentlüftende Schnellverschlußkupplung arbeitet wie folgt:
In dem in Fig. 5 veranschaulichten gekuppelten Zustand ist der Kupplungsstecker 2 mit seinem zylindrischen Steckerteil 17 ganz, d.h. weitmöglichst, in die Kupplungsbuchse 1 eingesteckt. In dieser Kupplungsstellung ist der Kupplungsstecker 2 durch die in seine Umfangsnut 18 eingerasteten Kugeln 24 der ersten Verriegelungseinrichtung 22 lagefest verriegelt. Die Kugeln 24 sind dadurch formschlüssig in ihrer Verriegelungsstellung gehalten, daß sie an der sie übergreifenden Innenfläche 37 des Ringes 36 der Schiebehülse 30 anliegen. Die Schiebehülse 30 selbst steht in ihrer am weitesten nach rechts (Fig. 5) vorgeschobenen Ausgangsstellung,in der sie durch die Druckfeder 52 gehalten ist.

Der eingesteckte Kupplungsstecker 2 hält über sein Steckerteil 17 und den O-Ring 28 das Ventilverschlußstück 10 in einer von dem Ventilsitz 13 abgehobenen Stellung, so daß das Absperrventil weitestmöglich geöffnet ist. Über in dem Ventilkörper 5 angeordnete radiale Druckbeaufschlagungskanäle 53 steht ein von dem Buchsenteil 3,dem Ventilkörper 5 und dem Ringkolben 47 begrenzter Zylinderraum 54 mit dem Gasdurchgangskanal 15 in Verbindung, so daß der Ringkolben 47 auf seiner Innenseite mit dem Gasdruck beaufschlagt ist. Der Ringkolben 47 steht deshalb in einer durch die Ringschulter 45 bestimmten Anschlagstellung, in der er, bezogen auf Fig. 5, weitestmöglich nach rechts zur Mündung der Kupplungsbuchse 30 hin vorgeschoben ist.

Die Verriegelungsstifte 39 der zweiten Verriegelungseinrichtung 23 liegen auf dem Steckerteil 17 in dem Bereich neben der Umfangsnut 18 auf. Sie sind durch die zusammengedrückte Druckfeder 41 über den Druckring 42 im Eingriffssinne vorgespannt.

Die Distanzhülse 26 schließlich wurde durch die Ringschulter 21 des Steckerteils 17 nach links geschoben; sie ist in dieser Stellung unwirksam.

Zum Entkuppeln schiebt der Benutzer, ausgehend von der Ausgangsstellung nach Fig. 5, die Schiebehülse 30 nach links in eine erste Stellung, die in Fig. 6 veranschaulicht ist. Bei dieser Bewegung der Schiebehülse 30 von der Ausgangsstellung nach Fig. 5 in die erste Stellung nach Fig. 6 gibt die Innenfläche 37 des Ringes 36 die Kugeln 24 der ersten Verriegelungseinrichtung 22 frei, so daß diese von der konischen Fläche 19 des zurückweichenden Kupplungssteckers 2 in ihren Bohrungen 25 radial nach außen gedrückt werden können. Bei seiner nach außen zu gerichteten Axialbewegung gibt der Kupplungsstecker 2 auch das Ventilverschlußstück 10 frei, so daß dessen Druckfeder 14 es, bezogen auf Fig. 5, nach rechts bewegen kann, bis der O-Ring 12 auf den Ventilsitz 13 aufläuft und damit das Absperrventil geschlossen ist. Dabei nimmt das Ventilverschlußstück 10 bei seiner Bewegung in die Schließstellung über den Ringflansch 11 und den O-Ring 28 die Distanzhülse 26 mit, die dadurch in die Stellung nach Fig. 7,8 verschoben wird, in der sie die Bohrungen 25 verschließt und die Kugeln 24 radial abstützt.

Kurz nachdem die Kugeln 24 in der geschilderten Weise aus der Umfangsnut 18 des Kupplungssteckers 2 ausgetreten sind, gelangt die Umfangsnut 18 in den Bereich der federbelasteten Verriegelungsstifte 39 der zweiten Verriegelungseinrichtung 23, die unter der Wirkung ihrer Federbelastung in die Umfangsnut 18 einrasten. Damit wird der Kupplungsstecker 2 durch die zweite Verriegelungseinrichtung 23 in einer Zwischenstellung verrastet, die in Fig.7 dargestellt ist.

In dieser Zwischenstellung ist der Kupplungsstecker 2 durch die zweite Verriegelungseinrichtung 23 unverlierbar in der Kupplungsbuchse 1 gehalten. Der Benutzer kann nunmehr die Schiebehülse 30 loslassen, die in ihrer erreichten ersten Stellung (Fig. 7) gegen die Wirkung der Druckfeder 52 dadurch verriegelt ist, daß sie sich mit ihrer Kegelfläche 38 gegen die Kugeln 24 axial abstützt, die ihrerseits radial auf der Distanzhülse 26 aufliegen und damit nicht ausweichen können.

Bei in dieser Zwischenstellung stehendem Kupplungsstecker 2 erfolgt die Entlüftung der an diesen angeschlossenen Leitung über den Kupplungsstecker 2, in dem Ventilkörper 5 vorgesehene Durchgangskanäle 55 und die Entlüftungskanäle 51 zwischen dem Ringkolben 47 und dem schürzenartigen Teil 35 der Schiebehülse 30. Gleichzeitig wird aber auch die Druckplatte 42 über in dem zweiten Hülsenteil 34 vorgesehene Kanäle 56 in dem gleichen Sinne wie durch die Druckfeder 41 wirkend mit Druck beaufschlagt. Damit wird erreicht, daß in der kritischen Phase nach dem Lösen der ersten Entriegelungseinrichtung 22 beim Wirksamwerden der zweiten Verriegelungseinrichtung 23 deren Verriegelungsstifte 39 zusätzlich im Eingriffssinne mit einer weiteren Kraft beaufschlagt werden, die das rasche und sichere Einrasten der Verriegelungsstifte 39 in die Umfangsnut 18 des sich nach außen bewegenden Kupplungssteckers 2 begünstigen.

In der in Fig. 7 dargestellten ersten Stellung ist die Schiebehülse 30 in der anderen Axialrichtung durch den einen Anschlag bildenden Ringkolben 47 arretiert, der zunächst noch von dem im Inneren der Kupplungsbuchse 1 herrschenden Gasdruck in seiner Anschlagstellung (Fig. 6) gehalten ist. Da das Abschlußventil, wie geschildert, bei in der Zwischenstellung (Fig. 7) stehendem Kupplungsstecker 2 geschlossen ist, während der Kupplungsstecker und die an diesen angeschlossene Leitung entlüften, sinkt der Druck im Inneren der Kupplungsbuchse 1 auf der dem Kupplungsstecker 2 zugewandten Seite des Ventilverschlußstückes 10 zunehmend ab. Da die Druckbeaufschlagungskanäle 53 des Ringkolbens 47 auf dieser Seite des Ventilverschlußstückes 12 innen münden, geht auch die Druckbeaufschlagung des Ringkolbens 47 entsprechend zurück. Sowie ein bestimmter Grenzwert dieser Druckbeaufschlagung unterschritten wird, kann die Druckfeder 52 zunehmend den Ringkolben 47, bezogen auf Fig. 6, nach links verschieben, so daß er die Schiebehülse 30 freigibt.

Die Entlüftung ist nunmehr soweit fortgeschritten, daß der Kupplungsstecker 2 gefahrlos aus der Kupplungsbuchse 1 entnommen werden kann. Zu diesem Zwecke schiebt der Benutzer, ausgehend von der Zwischenstellung nach Fig. 7, die von dem Ringkolben 47 freigegebene Schiebehülse 30 in ihre Endstellung nach Fig. 8. Bei dieser Bewegung werden die Verriegelungsstifte 39 der zweiten Verriegelungseinrichtung 32 von dem ersten Hülsenteil 31 der Schiebehülse 30 in den Schrägführungen 40 zwangsläufig nach hinten außen geführt, bis sie den Kupplungsstecker 2 freigeben (Fig. 8), der nunmehr aus der Kupplungsbuchse 1 entnommen werden kann.

Wenn der Benutzer die Schiebehülse 30 nunmehr lösläßt, kehrt sie unter der Wirkung der Druckfeder 52 in ihre erste Stellung nach Fig. 7 zurück, in der sie in bereits erläuterter Weise durch die Kugeln 24 der ersten Verriegelungseinrichtung 22 lagefest verriegelt ist. Die Verriegelungsstifte 39 der zweiten Verriegelungseinrichtung 23 sind in ihren Schrägführungen 40 soweit zurückgezogen, daß sie das Wiedereinstecken des Kupplungssteckers 2 bei einer nachfolgenden Kupplung nicht behindern.

Da der Ringkolben 47 durch den Druck im Inneren der Kupplungsmuffe 1 und des Kupplungssteckers 2 solange in der in den Fig. 5,6 dargestellten Anschlagstellung gehalten ist, bis dieser Druck bei der Entlüftung soweit abgebaut ist, daß die Druckfeder 52 den Ringkolben 47 in die Ruhestellung nach Fig. 8 zurückschieben kann, kann der Ringkolben 47 gleichzeitig als optisches Anzeigemittel für den Fortschritt der Entlüftung bei in der Zwischenstellung stehendem Kupplungsstecker 2 benutzt werden. Zu diesem Zwecke kann z.B. das Buchsenteil 3 auf dem Boden eines zwischen ihm und der Stirnfläche des schürzenartigen Teiles 35 der Schiebehülse 30 begrenzten Spaltes 58 bei 59 mit farbigen Markierungen versehen sein, die mit abnehmendem Innendruck zunehmend abgedeckt werden. Solange sie sichtbar sind, kann der Kupplungsstecker 2 nicht gefahrlos aus der Kupplungsbuchse 1 entnommen werden.

Beim Kuppeln wird der Kupplungsstecker 2 mit seinem Steckerteil 17 in die in dem Zustand nach Fig. 1 befindliche Kupplungsbuchse 1 eingesteckt. Dabei steht die Schiebehülse zunächst in ihrer ersten zurückgeschobenen Stellung, in der sie durch die Kugeln 24 gehalten ist. Die Verriegelungsstifte 39 werden von der Ringschulter 21 elastisch nach außen gedrückt; sie läuft sodann auf die Distanzhülse 26 auf, die im weiteren Verlauf der Einwärtsbewegung des Steckerteiles 17 nach links verschoben wird (Fig. 5), bis die Kugeln 24 freikommen. Damit kann die Druckfeder 52 über den Ring 36 und dessen Kegelfläche 38 die Kugeln radial nach innen drücken, bis sie sicher in die Umfangsnut 18 des Steckerteils 17 einrasten, der vorher - wie bereits früher erläutert - den Ventilverschlußkörper 10 im Öffnungssinne des Absperrventiles verschoben hatte. Sowie die Kugeln 24 eingerastet sind, kann die Schiebehülse 30 von der Druckfeder 52 wieder in die Ausgangsstellung nach Fig. 5 zurückgebracht werden, in der die Kugeln 24 in ihrer Verriegelungsstellung formschlüssig gehalten sind. Der Umstand, daß die Schiebehülse 30 wieder in ihre Ausgangsstellung zurückgekehrt ist, zeigt dem Benutzer an, daß die erste Verriegelungseinrichtung 22 den Kupplungsstecker 2 sicher fixiert hat. Die Schnellverschlußkupplung weist somit noch eine zusätzliche optische Sicherheitsanzeige für den Verriegelungszustand des Kupplungssteckers auf.

Anstelle der Verriegelungsstifte 39 könnte die zweite Verriegelungseinrichtung 23 auch mit Verriegelungselementen in Gestalt von Kugeln ausgebildet sein, wie dies an sich bekannt ist.

## Patentansprüche

1. Selbstentlüftende Schnellverschlußkupplung für Druckgas-, insbesondere Druckluftleitungen, mit einer an eine erste Leitung anschließbaren und einen Kupplungsstecker einer zweiten Leitung abgedichtet aufnehmenden Kupplungsbuchse, mit einem in der Kupplungsbuchse angeordneten, von dem eingesteckten Kupplungsstecker geöffnet zu haltenden Absperrventil, mit zwei an der Kupplungsbuchse angeordneten Verriegelungseinrichtungen, von denen jede wenigstens ein Verriegelungselement für den eingesteckten Kupplungsstecker aufweist, sowie mit einer auf der Kupplungsbuchse gegen Federkraft axial verschieblich gelagerten und mit den beiden Verriegelungseinrichtungen zusammenwirkenden, von Hand betätigbaren Schiebehülse, die, ausgehend von einer Ausgangsstellung, in der bei geöffnetem Absperrventil der Kupplungsstecker durch eine erste Verriegelungseinrichtung in seiner Kupplungsstellung gehalten ist, entgegen der Federkraft in eine erste Stellung verschiebbar ist, in der der Kupplungsstecker bei geschlossenem Absperrventil von der zweiten Verriegelungseinrichtung in einer Zwischenstellung gehalten ist, in der eine Entlüftungseinrichtung für die zweite Leitung wirksam ist, wobei die Schiebehülse sodann aus dieser ersten Stellung in der gleichen Richtung weiter in eine zweite Stellung verschiebbar ist, in der der Kupplungsstecker ganz freigegeben ist, dadurch gekennzeichnet, daß an der Kupplungsbuchse (1) ein einen axialen Anschlag für die in der ersten Stellung stehende Schiebehülse (30) bildendes bewegliches Sperrglied (47) gelagert ist, das bei geöffnetem Absperrventil (10, 13) mit dem Druck in der ersten Leitung beaufschlagt und in einer die Schiebehülse (30) arretierenden Anschlagstellung gehalten ist, und das bei geschlossenem Absperrventil (10, 13) unter Freigabe der Schiebehülse (30) über die Entlüftungseinrichtung (51, 55, 56) druckentlastet ist.

2. Schnellverschlußkupplung nach Anspruch 1, dadurch gekennzeichnet, daß das Sperrglied ein an einem Teil (3) der Kupplungsbuchse (1) axial verschieblich gelagerter Ringkolben (47) ist, durch den eine Zylinderkammer (54) begrenzt ist, die einen von dem Absperrventil (10, 13) gesteuerten Druckbeaufschlagungsanschluß (53) aufweist.

3. Schnellverschlußkupplung nach Anspruch 2, dadurch gekennzeichnet, daß der Druckbeaufschlagungsanschluß wenigstens einen nach innen führenden Kanal (53) aufweist, der innerhalb der Kupplungsbuchse (1) auf der stromabwärts von dem Ventilsitz (13) des Absperrventilesliegenden Seite mündet.

4. Schnellverschlußkupplung nach Anspruch 2, dadurch gekennzeichnet, daß das Sperrglied (47) einen von außen sichtbaren, als Anzeigemittel für die Druckbeaufschlagung des Sperrgliedes (47) wirkenden Teil (59) aufweist oder beinflußt.

5. Schnellverschlußkupplung nach einem der vorhergehenden Ansprüche, dadurch gekennzeichnet, daß die den Kupplungsstecker (2) in seiner Kupplungsstellung haltende erste Verriegelungseinrichtung (22) eine Kugelverriegelung mit wenigstens einer in einem Käfig (25) der Kupplungsbuchse (1) radial beweglich geführten Kugel (24) ist, die bei in der Ausgangsstellung stehender Schiebehülse (30) durch eine Fläche (37) an der Schiebehülse in einer Eingriffsstellung mit einer Nut (18) des Kupplungssteckers (2) gehalten und bei in der Zwischenstellung stehender Schiebehülse (30) von dieser freigegeben ist.

6. Schnellverschlußkupplung nach einem der vorhergehenden Ansprüche, dadurch gekennzeichnet, daß die Schiebehülse (30) in ihrer ersten Stellung durch eine der beiden Verriegelungseinrichtungen (22, 23) entgegen der Federkraft verriegelt ist, und daß ihre Verriegelung durch den Kupplungsstecker (2) beim Einschieben in die Kupplungsbuchse (1) lösbar ist.

7. Schnellverschlußkupplung nach den Ansprüchen 5 und 6, dadurch gekennzeichnet, daß die Schiebehülse (30) in ihrer Zwischenstellung durch die wenigstens eine Kugel (24) verriegelt ist.

8. Schnellverschlußkupplung nach einem der vorhergehenden Ansprüche, dadurch gekennzeichnet, daß die den Kupplungsstecker (2) in der Zwischenstellung haltende zweite Verriegelungseinrichtung (23) wenigstens ein in einer Schrägführung (40) der Kupplungsbuchse (1) beweglich geführtes Verriegelungselement (39) aufweist, das durch Federmittel (41) gegen die Schiebehülse (30) abgestützt ist.

9. Schnellverschlußkupplung nach Anspruch 8, dadurch gekennzeichnet, daß das wenigstens eine Verriegelungselement ein Verriegelungsstift (39) ist.

10. Schnellverschlußkupplung nach Anspruch 8 oder 9, dadurch gekennzeichnet, daß das Verriegelungselement (39) gegen die Federmittel (41) über ein in der Schiebehülse (30) beweglich gelagertes Druckstück (42) abgestützt ist, und daß das Druckstück bei in der Zwischenstellung stehendem Kupplungsstecker (2) über in der Schiebehülse ausgebildete Kanäle (56) der Entlüftungseinrichtung zeitweilig mit Druck in einem die Federmittel unterstützenden Sinne beaufschlagt ist.

11. Schnellverschlußkupplung nach Anspruch 3, dadurch gekennzeichnet, daß die Schiebehülse (30) den Ringkolben (47) zumindest teilweise übergreifend ausgebildet ist, und daß zwischen dem Ringkolben (47) und der Schiebehülse (30) nach außen führende Entlüftungskanäle (51) der Entlüftungseinrichtung angeordnet sind.

## Claims

1. Self-vented quick coupling for pressurised gas pipes, in particular for compressed air pipes, with a coupling socket, which may be connected to a first pipe and receives a coupling plug of a second pipe forming a seal, with a closing valve arranged in the coupling socket and to be held open by the inserted coupling plug, with two locking means arranged on the coupling socket, each of which having at least one locking element for the inserted coupling plug, and with a manually operated slider sleeve, which is mounted to axially slide on the coupling socket against spring force and cooperates with the two locking means, and which, from a starting position, in which the coupling plug is held in its coupling position by a first locking means when the closing valve is open, may be moved against the spring force into a first position, in which when the closing valve is closed the coupling plug is held by the second locking means in an intermediate position, in which a venting means is effective for the second pipe, wherein the slider sleeve may thus slide out of this first position in the same direction further into a second position, in which the coupling plug is completely released, characterised in that a locking element (47) forming an axial abutment for the slider sleeve (30) standing in the first position is disposed on the coupling socket (1), and said locking element (47) is subjected to the pressure in the first pipe when the closing valve (10, 13) is open and is held in an abutting position arresting the slider sleeve (30), and is vented through the venting means (51, 55, 56) when the closing valve (10, 13) is closed releasing the slider sleeve (30).

2. Quick coupling according to Claim 1, characterised in that the locking element is an annular plunger (47), which is supported on a part (3) of the coupling socket (1) to be axially displaceable and defines a cylindrical chamber (51), which has a pressure application connection (53) controlled by the closing valve (10, 13).

3. Quick coupling according to Claim 2, characterised in that the pressure application connection has at least one conduit (53) leading inwards, which feeds inside the coupling socket (1) on the side located downstream of the valve seat (13) of the closing valve.

4. Quick coupling according to Claim 2, characterised in that the locking element (47) has or controls a part (59) visible from the outside, which acts as an indicator means for the pressure application on the locking element (47).

5. Quick coupling according to one of the preceding claims, characterised in that the first locking means (22) holding the coupling plug (2) in its coupling position is a ball lock with at least one ball (24), which is guided in a cage (25) of the coupling socket (1) to be radially movable and which, when the slider sleeve (30) is in the starting position, is held by a surface (37) on the slider sleeve in an engagement position with a groove (18) of the coupling plug (2) and is released by the slider sleeve (30) when this is in its intermediate position.

6. Quick coupling according to one of the preceding claims, characterised in that the slider sleeve (30) is locked in its first position against the spring force by one of the two locking means (22, 23), and that its locking may be released by the coupling plug (2) on insertion into the coupling socket (1).

7. Quick coupling according to Claims 5 and 6, characterised in that the slider sleeve (30) is locked in its intermediate position by the at least one ball (24).

8. Quick coupling according to one of the preceding claims, characterised in that the second locking means (23) holding the coupling plug (2) in the intermediate position has at least one locking element (39), which is movably guided in an oblique guide (40) of the coupling socket (1) and is supported against the slider sleeve (30) by means of spring means (41).

9. Quick coupling according to Claim 8, characterised in that the at least one locking element is a locking pin (39).

10. Quick coupling according to Claim 8 or 9, characterised in that the locking element (39) is supported against the spring means (41) via a pressure pad (42) movably supported in the slider sleeve (30), and that, when the coupling plug (2) is in the intermediate position, the pressure pad is subjected intermittently to pressure in a direction supporting the spring means via conduits (56) of the venting means formed in the slider sleeve.

11. Quick coupling according to Claim 3, characterised in that the slider sleeve (30) is formed to engage at least partly over the annular plunger (47), and that outward leading venting conduits (51) of the venting means are provided between the annular plunger (47) and the slider sleeve (30).

## Revendications

1. Raccord rapide à obturateur et mise à l'air libre automatique pour conduites de gaz sous pression, notamment pour conduites d'air comprimé, comportant une partie de raccord femelle qui est connectée à une première conduite et reçoit avec étanchéité une partie de raccord mâle d'une deuxième conduite, une valve d'arrêt qui est logée dans la partie de raccord femelle et est maintenue ouverte par la partie de raccord mâle connectée, deux dispositifs de verrouillage qui sont disposés sur la partie de raccord femelle et comportent chacun au moins un élément de verrouillage de la partie de raccord mâle connectée, ainsi qu'une bague coulissante actionnée manuellement qui est montée sur la partie de raccord femelle avec possibilité de déplacement axial à l'encontre de la force d'un ressort et coopère avec les deux dispositifs de verrouillage, laquelle bague peut être amenée à l'encontre de la force d'un ressort d'une position d'origine, dans laquelle la partie de raccord mâle est maintenue dans sa position de couplage avec la valve d'arrêt ouverte par un premier dispositif de verrouillage, dans une première position dans laquelle, la valve d'arrêt étant fermée, la partie de raccord mâle est maintenue par le deuxième dispositif de verrouillage dans une position intermédiaire dans laquelle un dispositif de mise à l'air libre de la deuxième conduite est actif, la bague coulissante étant ensuite déplacée dans le même sens de ladite première position vers une deuxième position dans laquelle la partie de raccord mâle est totalement libérée, caractérisé par la fait qu'un élément de blocage (47) mobile formant une butée axiale pour la bague coulissante (30) dans la première position est monté sur la partie de raccord femelle (1), lequel élément de blocage, lorsque la valve d'arrêt (10, 13) est ouverte, est sollicité par la pression qui règne à l'intérieur de la première conduite et est maintenu dans une position de butée bloquant la bague coulissante (30) et, lorsque la valve d'arrêt (10, 13) est fermée, est déchargé de la pression par l'intermédiaire du dispositif de mise à l'air libre (51, 55, 56) et libère la bague coulissante (30).

2. Raccord rapide à obturateur selon la revendication 1, caractérisé par le fait que l'élément de blocage est un piston annulaire (47) qui est monté avec possibilité de déplacement axial sur une partie (3) de la partie de raccord femelle (1) et délimite une chambre cylindrique (54) qui comporte un piquage d'application de pression (53) commandé par la valve d'arrêt (10, 13).

3. Raccord rapide à obturateur selon la revendication 2, caractérisé par le fait que le piquage d'application de pression (53) présente au moins un conduit (53) qui mène vers l'intérieur et débouche à l'intérieur de la partie de raccord femelle (1) côté aval du siège (13) de la valve d'arrêt.

4. Raccord rapide à obturateur selon la revendication 2, caractérisé par le fait que l'élément de blocage (47) comporte ou agit sur un élément (59) visible de l'extérieur qui indique qu'une pression est appliquée sur l'élément de blocage (47).

5. Raccord rapide à obturateur selon l'une des revendications précédentes, caractérisé par le fait que le premier dispositif de verrouillage (22) qui maintient la partie de raccord mâle (2) dans sa position couplée est un dispositif de verrouillage à bille comportant au moins une bille (24) qui est guidée avec possibilité de déplacement radial dans une cage (25) de la partie de raccord femelle (1), qui est maintenue en prise avec une gorge (18) de la partie de raccord mâle (2) par une surface (37) lorsque la bague coulissante (30) est dans la position d'origine et est libérée par celle-ci lorsque la bague coulissante (30) se trouve dans la position intermédiaire.

6. Raccord rapide à obturateur selon l'une des revendications précédentes, caractérisé par le fait que la bague coulissante (30) est verrouillée dans sa première position par l'un des deux dispositifs de verrouillage (22, 23), à l'encontre de la force de ressorts, et par le fait que son verrouillage est annulé par la partie de raccord mâle (2) lorsqu'on l'introduit dans la partie de raccord femelle (1).

7. Raccord rapide à obturateur selon les revendications 5 et 6, caractérisé par le fait que la bague coulissante (30) est verrouillée dans sa position intermédiaire par la bille (24) au nombre d'au moins une.

8. Raccord rapide à obturateur selon l'une des revendications précédentes, caractérisé par le fait que le deuxième dispositif de verrouillage (23) qui maintient la partie de raccord mâle (2) dans la position intermédiaire comporte au moins un élément de verrouillage (39) qui se déplace sur une rampe de guidage (40) de la partie de raccord femelle (1) et prend appui sur la bague coulissante (30) par l'intermédiaire de moyens élastiques (41).

9. Raccord rapide à obturateur selon la revendication 8, caractérisé par le fait que l'élément de verrouillage au nombre d'au moins un est un doigt de verrouillage (39).

10. Raccord rapide à obturateur selon la revendication 8 ou 9, caractérisé par le fait que l'élément de verrouillage (39) prend appui sur les moyens élastiques (41) par l'intermédiaire d'une pièce de pression (42) mobile à l'intérieur de la bague coulissante (30) et par le fait que, lorsque la partie de raccord mâle (2) se trouve dans la position intermédiaire, la pièce de pression est sollicitée temporairement par la pression dans le sens d'un renforcement de l'action des moyens élastiques grâce à des canaux (56) aménagés dans le dispositif de mise à l'air libre.

11. Raccord rapide à obturateur selon la revendication 3, caractérisé par le fait que la bague coulissante (30) recouvre au moins partiellement le piston (47) annulaire et par le fait que des canaux de mise à l'air libre (51) du dispositif de mise à l'air libre menant vers l'extérieur sont aménagés entre le piston annulaire (47) et la bague coulissante (30).
